# EUROPEAN PATENT APPLICATION

(11) **EP 3 730 468 A1**
(43) Date of publication of application: **28.10.2020**
(21) Application number: 18855153.5
(22) Date of filing: 13.12.2018
(51) Int. Cl.: C04B 33/00, A44C 27/00, A47G 33/00, B28B 1/00, B44C 3/00, C04B 33/04, C04B 33/132, C04B 41/00

(54) **CLAY-BASED COMPOSITION OF SENTIMENTAL VALUE FOR USE AS A RELIQUARY**

(30) Priority: 19.12.2017 ES 201731541 U
(71) Applicant: Narbon, S.L., 28005 Madrid (ES)
(72) Inventor: NARBÓN PRIETO, Gabriel, 28005 Madrid (ES); SÁNCHEZ-GUITARD LÓPEZ-VALERA, Francisco Ramón, 28005 Madrid (ES); TERUEL SAIZ, Antonio, 28005 Madrid (ES)
(74) Representative: Pons
(86) International application number: PCT/ES2018/070803
(87) International publication number: WO 2019/122475

(57) **Abstract**

The present invention relates to a composition comprising clay and a sample of biological material of human, animal or vegetable origin. Moreover, the invention relates to the use of said composition for manufacturing an emotional or commemorative object, or a reliquary. The purpose of the composition of the invention is to create an emotional bond between an object comprising said composition and the user who acquires it.

## Description

The present invention relates to a composition comprising clay and a sample of biological material of human, animal or vegetable origin. Moreover, the invention relates to the use of said composition for manufacturing an emotional or commemorative object, or a reliquary.

The purpose of the composition of the invention is to create an emotional bond between an object comprising said composition and the user who acquires it.

### BACKGROUND OF THE INVENTION

Currently, there are different products designed for paying tribute and remembering living beings, either persons or pets, especially when they have passed away. Said products are traditionally created using hair, teeth and other parts or tissues of the loved one that is to be remembered.

However, thus far no compositions have been developed the basis whereof is the "essence" of the loved one in different forms or presentations.

### DESCRIPTION OF THE INVENTION

The present invention provides a composition that comprises a mixture of at least one clay and a biological sample from a subject, alive or dead, wherein said biological sample is dry. The purpose of said composition is to manufacture an emotional object or reliquary.

The gained advantage of using the emotional composition of the present invention as compared to the rest of the compositions described in the prior art is its customisability and the homogeneous appearance of both the composition and the object formed from said composition, including by means of compression. Another advantage is the preservation of the biological material from the subject, alive or dead, that is part of the composition, which generates an emotional bond between the aforementioned subject and the person who wears or owns said emotional composition.

Therefore, a first aspect of the invention relates to an emotional composition characterised in that it comprises:
(a) a clay; and
(b) a biological sample from a subject, wherein said biological sample is dry.

In a preferred embodiment of the invention, the subject is a live subject.

In another preferred embodiment of the invention, the subject is a dead or deceased subject.

In a preferred embodiment of the emotional composition, the latter is characterised in that the clay has a particle size of less than 0.02 millimetres. This preferred embodiment is suitable for obtaining a suitable composition with optimal particle sizes to be used as a 3D printer ink, since, with these particle sizes, the composition of the reliquary is optimised for extrusion at pressures of 4 bars from the pressurised chamber of a 3D printer.

In another preferred embodiment, the emotional composition is characterised in that the clay is selected from the list that comprises: white clay, calcareous earthenware paste, dolomite, feldspar, kaolinite, halloysite, illite, chlorite, vermiculite, montmorillonite, sepiolite-palygorskite and any combination thereof.

In a more preferred embodiment, the emotional composition is characterised in that the clay is white clay.

In another preferred embodiment, the emotional composition is characterised in that the biological sample is selected from the following list: micronised hair, micronised tissue, micronised cornea, tissue from micronised cornea, micronised nails, micronised teeth, lyophilised DNA-silica and non-lyophilised DNA.

In a more preferred embodiment, the emotional composition is characterised in that the biological sample is micronised hair.

In another, more preferred embodiment, the emotional composition is characterised in that the biological sample is lyophilised DNA-silica.

In another, more preferred embodiment, the emotional composition is characterised in that the biological sample is non-lyophilised DNA.

In another preferred embodiment, the emotional composition is characterised in that the weight percentage of the clay ranges between 90% and 95% with respect to the final composition.

In another preferred embodiment, the emotional composition is characterised in that the weight percentage of the biological sample ranges between 5% and 10% with respect to the final composition.

In another preferred embodiment, the emotional composition is characterised in that said dead subject is a human being or an animal.

In another preferred embodiment, the emotional composition is characterised in that this composition is baked, is in solid form and further comprises an outer layer (c) of glaze, wherein said outer layer of glaze is suitable for using the composition as a ceramic element or figure, or a three-dimensional figure or element obtained by means of 3D printing. This glaze is added in order for the pores generated during said baking process to be occluded with said glaze, which provides uniformity and rigidity to the final ceramic element or figure, or the three-dimensional figure or element obtained by means of 3D printing. This glaze is added following baking of the emotional composition in a conventional oven at a temperature ranging between 800ºC and 900ºC, and prior to a second baking in a conventional oven at a temperature ranging between 1000ºC and 1060ºC.

In an even more preferred embodiment of the composition, wherein the layer of glaze is a resin selected from the following list: epoxy resin, photosensitive resin or any combination thereof.

In another preferred embodiment, the emotional composition is characterised in that the particle size of the clay with respect to the size of the emotional biological sample is such that it prevents large pores from being generated in the structure, which minimises the fragility of the ceramic object and achieves suitable compaction of the ceramic object containing the emotional biological sample, thereby preventing the delamination or breakage thereof.

Another aspect of the present invention relates to an element or figure that comprises a composition according to the description of the present invention.

Another aspect of the present invention relates to an element or figure that comprises a composition comprising an outer layer of glaze, preferably a resin selected from the following list: epoxy resin, photosensitive resin or any combination thereof, and which is mounted on a support.

A preferred embodiment of the present invention is the element or figure, wherein said element or figure is three-dimensional.

Another aspect of the emotional composition of the present invention is the use thereof as ink for a 3D printer, in order to obtain a three-dimensional element or figure.

Preferably, the three-dimensional element or figure is a reliquary.

Another aspect of the emotional composition of the present invention is the use thereof as a ceramic element or figure.

Another aspect of the emotional composition of the present invention is the use thereof as a reliquary.

A more preferred embodiment is the use of the already-glazed three-dimensional element or figure, or ceramic figure, mounted on the corresponding supports.
In the present invention, "emotional composition" is understood to mean any composition that comprises an isolated biological sample from a living or dead (deceased) subject.

In the present invention, "biological sample" is understood to mean any wet or dry sample of biological material obtained from limbs or parts of limbs, tissues, hair, nails, teeth, DNA or lyophilised DNA, of any human being or animal, or vegetable material, wherein said human, animal or vegetable may be alive or dead. This biological sample is dry and is ground to a micrometric size. This micronisation may be performed by means of a cryogenic mill; this process is advantageous since, given the organic characteristics of the sample, it is an affordable, profitable way to obtain the base of the composition of the invention and the final object with suitable characteristics in terms of size and appearance.

In the present invention, "subject" is understood to mean a human being, an animal or a vegetable.

In the present invention, "lyophilised DNA-silica" is understood to mean any biological sample wherefrom the DNA is extracted by means of techniques known to persons skilled in the art, and which is subsequently subjected to a process of lyophilisation in silica.

In the present invention, "clay" is understood to mean any particle or fragment of a phyllosilicate or any other agglomerating mineral with a particle size of less than 0.002 millimetres.

In the present invention, "phyllosilicate" is understood to mean a sub-class of silicates, which includes minerals that are common in very diverse environments and have as a common feature a leafy (phyllon = leaf) or flaky habit arising from the existence of a perfect basal exfoliation. This is caused by the presence in its structure of infinite-dimensional tetrahedral layers in two directions of space. The chemical formula for these compounds always contains the (Si₂O₅²⁻)ₙ anion.

Throughout the description and the claims, the word "comprises" and variants thereof are not intended to exclude other technical characteristics, additives, components or steps. For persons skilled in the art, other objects, advantages and characteristics of the invention will arise, partly from the description and partly from the implementation of the invention. The following examples and figures are provided for illustrative purposes, and are not intended to limit the scope of the present invention.

### PREFERRED EMBODIMENT OF THE INVENTION

Below we provide a detailed description of a preferred embodiment of the object of the present invention.

### Preparation of a figure made of clay and hair obtained bv means of 3D printing and subsequent glazing.

In order for the composition to have a suitable consistency, 30 g of white clay must be mixed with alcohol in an approximate proportion of 5%, in order to obtain a suitable plastic texture for the additive manufacturing process. This texture in neither too dense nor too liquid. This mixture is introduced into a tube.

On the other hand, the micronised hair is introduced into an ancillary tube in a proportion of 10% of the total mass of clay. The mass of clay and the hair are introduced into the syringe designed for this purpose and both components are mixed using a blender.

Subsequently, the mixture of hair and clay is introduced into the tube in order to perform the printing, and the piece is made on the corresponding glass base. Once the printing is completed, the piece is allowed to dry for approximately 8-12 h.

When the piece is completely dry, the first baking is performed, which takes about 15 h; the maximum temperature reached in this first baking is 850°C.

The piece is glazed, with the aid of a paint brush, by coating the entire surface thereof, and a second baking is performed, wherein the glaze melts onto the surface of the clay. This process takes 12 h and reaches a maximum temperature of 1030°C.

Finally, the already-glazed piece is mounted on the corresponding supports.

## Claims

1. Emotional composition **characterised in that** it comprises:
(a) clay; and
(b) a biological sample from a subject, wherein said biological sample is dry.

2. Composition according to claim 1, wherein the subject is a live subject.

3. Composition according to claim 1, wherein the subject is a dead subject.

4. Composition according to any of claims 1 to 3, wherein the clay is selected from the list that comprises: white clay, calcareous earthenware paste, dolomite, feldspar, kaolinite, halloysite, illite, chlorite, vermiculite, montmorillonite, sepiolite-palygorskite and any combination thereof.

5. Composition according to claim 4, wherein the clay is white clay.

6. Composition according to any of claims 1 to 5, wherein the biological sample is selected from micronised hair, micronised tissue, micronised cornea, tissue from micronised cornea, micronised nails, micronised teeth, lyophilised DNA-silica and non-lyophilised DNA, or micronised vegetable tissue.

7. Composition according to claim 6, wherein the biological sample is micronised hair.

8. Composition according to claim 6, wherein the biological sample is lyophilised DNA-silica.

9. Composition according to claim 6, wherein the biological sample is non-lyophilised DNA.

10. Composition according to any of claims 1 to 9, wherein the weight percentage of the clay ranges between 90% and 95% with respect to the final composition.

11. Composition according to any of claims 1 to 10, wherein the weight percentage of the biological sample ranges between 5% and 10% by weight with respect to the final composition.

12. Composition according to any of claims 1 to 11, wherein the subject is a human being or an animal.

13. Composition according to any of claims 1 to 12, wherein said composition is baked, is in solid form and further comprises an outer layer of glaze.

14. Composition according to claim 13, wherein the layer of glaze is a resin selected from the following list: epoxy resin, photosensitive resin or any combination thereof.

15. Element or figure that comprises a composition according to any of claims 1 to 14.

16. Element or figure that comprises a composition according to any of claims 13 or 14, and is crimped on a support.

17. Element or figure according to any of claims 15 or 16, wherein the element or figure is three-dimensional.

18. Use of the composition according to any of claims 1 to 12, as ink for a 3D printer, in order to obtain a three-dimensional element or figure.

19. Use according to claim 18, wherein the three-dimensional element or figure is a reliquary.

20. Use of the composition according to any of claims 1 to 14, as a ceramic element or figure.

21. Use of the disclosed composition according to claim 20 as a reliquary.

22. Use according to any of claims 18 or 20, wherein the already-glazed three-dimensional element or figure, or ceramic figure, is crimped on the corresponding supports.
